# EUROPEAN PATENT SPECIFICATION

(11) **EP 1 513 215 B1**
(45) Date of publication and mention of the grant of the patent: **02.06.2010**
(21) Application number: 04020911.6
(22) Date of filing: 02.09.2004
(51) Int. Cl.: H01M 10/0568, H01M 10/052

(54) **Polyfluorinated boron cluster anions for lithium electrolytes**
Polyfluorierte-Bor-Cluster-Anionen für Lithiumelektrolyten
Agrégats anioniques polyfluorinés de bore pour electrolytes au lithium

(30) Priority: 04.09.2003 US 655476; 23.08.2004 US 924293
(43) Date of publication of application: 09.03.2005
(73) Proprietor: AIR PRODUCTS AND CHEMICALS, INC., Allentown, PA 18195-1501 (US)
(72) Inventor: Ivanov, Sergei Vladimirovich, Schnecksville PA 18078 (US); Casteel, William Jack, Jr., Emmaus PA 18049 (US); Pez, Guido Peter, Allentown PA 18103 (US); Ulman, Michael, Alburtis PA 18011 (US)
(74) Representative: Kador & Partner

(56) References cited:
- US-A- 4 020 240
- US-A- 4 071 664
- US-A- 6 159 640
- US-A1- 2002 028 388

## Description

### BACKGROUND OF THE INVENTION

Lithium secondary batteries, by virtue of the large reduction potential and low molecular weight of elemental lithium, offer a dramatic improvement in power density over existing primary and secondary battery technologies. Here, lithium secondary battery refers to both batteries containing metallic lithium as the negative electrode and batteries which contain a lithium ion host material as the negative electrode, also known as lithium-ion batteries. By secondary battery it is meant a battery that provides for multiple cycles of charging and discharging. The small size and high mobility of lithium cations allow for the possibility of rapid recharging. These advantages make lithium batteries ideal for portable electronic devices, e.g., cell phones and laptop computers. Recently, larger size lithium batteries have been developed and have application for use in the hybrid vehicle market.

The following patents are representative of lithium batteries and electrochemical cells:

US 4,201,839 discloses an electrochemical cell based upon alkali metal-containing anodes, solid cathodes, and electrolytes where the electrolytes are closoborane compounds carried in aprotic solvents. Closoboranes employed are of the formula Z₂BnXn and ZCRBmXm wherein Z is an alkali metal, C is carbon, R is a radical selected from the group consisting of organic hydrogen and halogen atoms, B is boron, X is one or more substituents from the group consisting of hydrogen and the halogens, m is an integer from 5 to 11, and n is an integer from 6-12. Specifically disclosed examples of closoborane electrolytes employed in the electrochemical cells include lithium bromooctaborate, lithium chlorodecaborate, lithium chlorododecabate, and lithium iododecaborate.

US 4,071,664 discloses an electrochemical cell comprising an active metal anode and an electrolyte solvent/cathode depolarizer which reduces anode passivation during long time storage, even at elevated temperatures, by the inclusion of a minor proportion of an electrolyte salt additive having a cloroborate anion structure.

US 5,849,432 discloses electrolyte solvents for use in liquid or rubbery polymer electrolyte solutions based upon boron compounds with Lewis acid characteristics, e.g., boron linked to oxygen, halogen atoms, and sulfur. A specific example of an electrolyte solution comprises lithium perchlororate and boron ethylene carbonate.

US 6,346,351 discloses secondary electrolyte systems for a rechargeable battery of high compatibility towards positive electrode structures based upon a salt and solvent mixture. Lithium tetrafluoroborate and lithium hexafluorophosphate are examples of salts. Examples of solvents include diethyl carbonate, dimethoxyethane, methylformate, and so forth. In the background, there is disclosed known electrolytes for lithium batteries, which include lithium perchlorate, lithium hexafluoroarsenate, lithium trifluoromethylsulfonate, lithium tetrafluoroborate, lithium bromide, and lithium hexafluoroantimonate electrolytes incorporated in solvents.

US 6,159,640 discloses electrolyte systems for lithium batteries used in electronic equipment such as mobile phones, laptop computers, camcorders, etc based upon fluorinated carbamates. A variety of fluorinated carbamate salts, e.g., trifluoroethyl-N, N-dimethylcarbamate is suggested.

US 6,537,697 discloses lithium secondary battery using a nonaqueous electrolyte including lithium tetrakis(pentafluorophenyl)borate as an electrolyte salt.

As represented above a wide variety of lithium-based electrolytes comprising a lithium salt for lithium batteries are disclosed and, although having use in many electronic applications, they are faced with problems associated with safety, oxidative stability, thermal stability, and so forth. Fluorinated electrolyte salts have had the additional problem that toxic HF can be produced on compound breakdown. The following are some of the deficiencies associated with specific electrolyte salts: lithium hexafluorophosphate fails primarily on the basis that it is unstable, generating HF, which leads to electrode corrosion, particularly with LiMn₂O₄ cathode materials; lithium perchlorate has relatively low thermal stability leading to explosive mixtures above 100°C; lithium hexafluoroarsenate has a problem of arsenic toxicity; and lithium triflate lead to significant corrosion of aluminum current collectors typically used in lithium ion batteries.

### BRIEF SUMMARY OF THE INVENTION

The present invention relates to lithium secondary batteries comprising a negative electrode, a positive electrode and a lithium based electrolyte salt of the formula:

Li₂B₁₂FₓZ₁₂₋ₓ

wherein x is greater than or equal to 7, preferably at least 8, or at least 10 but not more than 12 or 11 and Z represents H, Cl, or Br.

Some of the advantages associated with the use of the fluorinated lithium borohydride salt for forming the lithium-based electrolyte may include:
an ability to use a lithium based salt for an electrolyte solution which has electrochemical, thermal, and hydrolytic stability;
an ability to use a lithium electrolyte solution which can be used at a low lithium based salt concentration, e.g., one-half the concentration of many other lithium based salts, e.g.,LiPF₆;and,
an ability to form low viscosity, low impedance lithium electrolyte solutions which can be recycled.

### DETAILED DESCRIPTION OF THE INVENTION

A lithium secondary battery, capable of multiple cycles of charging and discharging, is dependent on an electrolyte conducting solution carrying lithium ions. The two major requirements for lithium battery electrolyte solutions are: (a) a high conductivity in a non-aqueous ionizing solution, and (b) chemical stability to both heat, hydrolysis and particularly to electrochemical cycling over a wide potential range. Other desired features of lithium electrolyte solutions include: high flash point; low vapor pressure; high boiling point; low viscosity; good miscibility with solvents customarily employed in batteries, especially ethylene carbonate, propylene carbonate and alpha-omega-dialkyl glycol ethers; good electrical conductivity of their solutions over a wide temperature range, and tolerance to initial moisture content.

The present lithium secondary battery is characterized in that the lithium based electrolyte salt for forming lithium electrolyte solutions is based upon a lithium fluorododecaborate of the formula:

Li₂B₁₂FₓZ₁₂₋ₓ

where x is greater than or equal to 7, preferably at least 8, and most preferably at least 10 but not more than 12, or 11, and Z represents H, Cl, or Br. Specific examples of lithium based fluorinated dodecaborates include: Li₂B₁₂F₇H₅, Li₂B₁₂F₈H₄, Li₂B₁₂F₉H₃, Li₂B₁₂F₁₀H₂, Li₂B₁₂F₁₁H and mixtures of salts with varying x such that the average x is equal to or greater than 7, or equal to 9 or 10, or Li₂B₁₂FₓCl₁₂₋ₓ and Li₂B₁₂FₓBr₁₂₋ₓ where x is 10 or 11.

The lithium salt employed for forming electrolytes solutions for use in lithium batteries can be formed by fluorinating hydridodecaborates initially to provide a fluorododecaborate having at least 7, preferably at least 8 and most preferably at least 10 but not more than 12 or more hydrogen atoms replaced with fluorine (average basis). Lithium-ion metathesis gives the lithium salt. This reaction is carried out in a liquid medium. In direct fluorination, fluorine is diluted with an inert gas, e.g., nitrogen. Fluorine concentrations from 10 to 40 % by volume are commonly employed. If further halogenation is desired, the partially fluorinated hydridoborate is reacted with the desired halogen, e.g., chlorine or bromine.

Unlike the formation of lithium bromoborates and chloroborates, the formation of the highly fluorinated lithium fluorododecaborates, e.g., those having at least 10 fluorine atoms is extremely difficult. Complete fluorination of the lithium hydridoborate can be effected, but because of the reactive nature of fluorine, there is associated attack of the hydridoborate, which leads to yield loss.

To facilitate formation of the lithium fluoroborates as electrolyte salts, direct fluorination of the lithium hydridoborate is carried out in an acidic liquid medium, e.g., an acidic liquid medium or carrier such as neat or anhydrous HF reduced in acidity by the incorporation of an acid. Examples of acids include formic, acetic, trifluoroacetic, dilute sulfuric triflic, and sulfonic acids hydrohalic (HCl_{(aq)}, HBr_{(aq)}, Hl_{(aq)}, and HF_{(aq)}). The addition of buffering salts, e.g., alkali metal fluorides such as potassium and sodium fluoride, also can reduce the acidity of neat HF in the fluorination reaction. A Hammett acidity, Hₒ, between 0 > Hₒ > -11 is preferred as an acidic medium for effecting fluorination.

Radical scavengers can be used in the fluorination of lithium hydridododecaborates to reduce byproduct formation and improve reaction efficiency. In aqueous solutions, radical scavengers appear to limit the formation of hydrogen peroxide, or HOF which may be generated with fluorine. Radical scavengers are used to adjust acidity, and inhibit the side-reaction of fluorine with the solvent, thereby improving fluorination efficiency. Examples of radical scavengers include oxygen, and nitroaromatics. A simple method for introducing a radical scavenger is to introduce a small amount of air to the liquid medium.

Fluorination of the hydridoborate anion can be carried out over a temperature range sufficient to maintain liquid phase conditions. For effecting the fluorination of the dodecaborate anion the temperature generally ranges from -30 to 100°C, typically from 0 to 20°C. Pressures during fluorination are such as to maintain liquid phase conditions, typically atmospheric for the fluorination of the dodecaborate anion.

In the formulation of an electrolyte solution for a lithium battery, the lithium salt is carried in an aprotic solvent. Typically, these aprotic solvents are anhydrous, and anhydrous electrolyte solutions are preferred. Examples of aprotic solvents or carriers for forming the electrolyte systems include dimethyl carbonate, ethyl methyl carbonate, diethyl carbonate, methyl propyl carbonate, ethyl propyl carbonate, dipropyl carbonate, bis(trifluoroethyl) carbonate, bis(pentafluoropropyl) carbonate, trifluoroethyl methyl carbonate, pentafluoroethyl methyl carbonate, heptafluoropropyl methyl carbonate, perfluorobutyl methyl carbonate, trifluoroethyl ethyl carbonate, pentafluoroethyl ethyl carbonate, heptafluoropropyl ethyl carbonate, perfluorobutyl ethyl carbonate, etc., fluorinated oligomers, dimethoxyethane, triglyme, dimethylvinylene carbonate, tetraethyleneglycol, dimethyl ether, polyethylene glycols, sulfones, and gamma-butyrolactone.

In another embodiment, the electrolyte system of the present invention can comprise an aprotic gel polymer carrier/solvent. Suitable gel polymer carrier/solvents include polyethers, polyethylene oxides, polyimides, polyphosphazines, polyacrylonitriles, polysiloxanes, polyether grafted polysiloxanes, derivatives of the foregoing, copolymers of the foregoing, crosslinked and network structures of the foregoing, blends of the foregoing, and the like, to which is added an appropriate ionic electrolyte salt. Other gel-polymer carrier/solvents include those prepared from polymer matrices derived from polypropylene oxides, polysiloxanes, sulfonated polyimides, perfluorinated membranes (Nafion^{TM} resins), divinyl polyethylene glycols, polyethylene glycol-bis-(methyl acrylates), polyethylene glycol-bis(methyl methacrylates), derivatives of the foregoing, copolymers of the foregoing, crosslinked and network structures of the foregoing.

The solution of aprotic solvent and fluorinated lithium dodecaborate salt employed for forming the lithium based electrolyte for the lithium battery typically will have a concentration of lithium fluorododecaborate of at least 0.01 or 0.05 to 1 molar and preferably from 0.1 to 0.6 molar or from 0.2 to 0.5 molar. Higher concentrations tend to become too viscous and, the bulk conductivity characteristics are adversely affected. Also, solutions formed from lithium based fluoroborates having an increased concentration of halogen atoms other than fluorine show an increase viscosity to the lithium fluoroborates having higher fluorine content.

Other lithium based salts can be used in combination with the lithium based fluoroborates, e.g. LiPF₆, lithium perchlorate, lithium hexafluoroarsenate, lithium trifluoromethylsulfonate, lithium tetrafluoroborate, lithium bromide, and lithium hexafluoroantimonate as desired. The salts of this invention can be used in combination with other salts in any amounts. If such salts are used, they may be added in any (or small) amounts to the lithium fluoroborate based electrolyte here or the lithium based fluoroborates may be added to the batteries employing other based lithium salt in any (or small) amounts.

The lithium battery employing the lithium fluorododecaborate electrolyte can be any using a cathode and a negative anode. In forming the lithium battery, the negative electrodes for use in a lithium secondary battery typically can be based generally upon non-graphitizing carbon, natural or artificial graphite carbon, or tin oxide, silicon, or germanium compound. Any of the conventional anode compositions may be used in combination with the lithium fluorododecaborate electrolytes here.

The positive electrode for use in lithium secondary batteries typically can be based upon a lithium composite oxide with a transition metal such as cobalt, nickel, manganese, etc., or a lithium composite oxide, part of whose lithium sites or transition metal sites is replaced with cobalt, nickel, manganese, aluminum, boron, magnesium, iron, copper, etc. or iron complex compounds such as ferrocyan blue, berlin green, etc.. Specific examples of lithium composites for use as positive electrodes include LiNi₁₋ₓCoₓO₂ and lithium manganese spinel, LiMn₂O₄. The former composite presents significant safety concerns due to the very high oxidizing potential of Ni(IV). The latter composite is significantly less oxidizing than the Ni(IV) lithium battery and leads to far better redox kinetics and much higher power densities than the nickel cobaltate cathode.

The separator for the lithium battery often is a microporous polymer film. Examples of polymers for forming films include: nylon, cellulose, nitrocellulose, polysulfone, polyacrylonitrile, polyvinylidene fluoride, polypropylene, polyethylene, polybutene, etc. Recently ceramic separators, based on silicates, have also been used.

The battery is not limited to particular shapes, and can take any appropriate shape such as cylindrical shape, a coin shape, and a square shape. The battery is also not limited to particular capacities, and can have any appropriate capacity for both small appliances and power storage for electric cars.

The following examples are intended to illustrate various embodiments of the invention and are not intended to restrict the scope thereof.

### Example 1

### Preparation of Li₂B₁₂FₓH₁₂₋ₓ, where x = 10-12

A colorless slurry containing 2.96 g (11.8 mmol) K₂B₁₂H₁₂^{.}CH₃OH in 6 ml formic acid at an average Hammett acidity of Hₒ = -2 to -4 was fluorinated at 0 to 20°C. When 100% of the desired F₂ (142 mmol) was added as a mixture of 10%F₂/10%O₂/80%N₂, a colorless solution remained. Further fluorination (3%) at 30°C resulted in precipitation of solid from solution. Solvents were evacuated overnight, leaving 5.1 g of a colorless, friable solid. Analysis of this crude product by ¹⁹F NMR revealed primarily B₁₂F₁₀H₂²⁻ (60%), B₁₂F₁₁H²⁻ (35%), and B₁₂F₁₂²⁻ (5%). The crude reaction product was dissolved in water and the pH of the solution adjusted to between 4-6 with triethylamine and triethylamine hydrochloride. The precipitated product was filtered, dried, and resuspended in water. Two equivalents of lithium hydroxide monohydrate were added to the slurry and the resulting triethylamine evacuated. Additional lithium hydroxide was added until the pH of the final solution remained at 9-10 after distillation of all triethylamine. Water was removed by distillation and the final product was vacuum-dried at 200°C for 4-8 hrs. Typical yields of Li₂B₁₂FₓH₁₂₋ₓ (x = 10,11,12) were ~ 75%.

### Example 2

### Preparation of Li₂B₁₂FₓBr₁₂₋ₓ (x ≥ 10, ave. x = 11)

3g Li₂B₁₂FₓH₁₂₋ₓ (x ≥ 10) (0. 008 mol) of average composition Li₂B₁₂F₁₁H was dissolved in 160 mL of 1 M HCl_{(aq)}. Br₂, 1.4 mL (0.027mol) was added and the mixture refluxed at 100°C for 4 hours. A sample was taken for NMR analysis.

A portion of the above sample was returned to reflux and chlorine was added over a period of 6 hrs to form the more potent brominating agent BrCl. At the completion of chlorine addition, an aliquot was taken and NMR analysis showed the composition of the aliquot to be identical to the composition of the first aliquot. HCl and water were distilled away and the product was vacuum dried at 150°C. A total of 2.55 g white solid product was isolated. Theoretical for Li₂B₁₂FₓBr₁₂₋ₓ (x ≥ 10, ave. x = 11) is 3.66 g.

### Example 3

### Preparation of Li₂B₁₂FₓCl₁₂₋ₓ (ave. x = 11)

20 g Li₂B₁₂F₁₁H mixture dissolved in 160 mL 1 M HCl in a three neck round bottom flask fitted with a reflux condenser and fritted bubbler. The mixture was heated to 100°C and Cₗ₂ gas was bubbled through at 15 standard cubic centimeter (sccm/min). The effluent, through the condenser, was passed through a solution of KOH and Na₂SO₃. After 16 hours of bubbling Cl₂, the solution was purged with air. The HCl and water were distilled out and the residue was tritrated with ether. Upon ether evaporation and vacuum oven drying of the white solid, 20 g of material of the above formula were recovered (92%). ¹⁹F-NMR in D₂O: -260.5, 0.035 F; -262.0, 0.082 F; -263.0, 0.022 F; -264.5, 0.344 F; -265.5, 0.066 F; -267.0, 0.308 F; -268.0, 0.022 F; -269.5, 1.0 F. ¹¹B-NMR in D₂O: -16.841; -17.878

### Example 4 (comparative)

### Preparation of Li₂B₁₂FₓCl₁₂₋ₓ (ave. x =3)

3.78 g K₂B₁₂F₃H₉ mixture was dissolved in 100 mL 1M HCl in a three neck round bottom flask fitted with a reflux condenser and fritted bubbler. The mixture was heated to 100 °C and Cl₂ gas was bubbled through at 15 sccm. The effluent, through the condenser was passed through a solution of KOH and Na₂SO₃. After 8 hours of bubbling Cl₂, the solution was purged with air. There was some precipitate that formed and it was filtered out. The solution was brought to a pH of 9 by the addition of Et₃N which produced a white precipitate. The solution was cooled to 0 °C to maximize precipitation and then filtered on a Buchner funnel and washed with cold water. The solid was dried in a vacuum at 120 °C. 4.62 g of a composition of the above formula was recovered. ¹⁹F-NMR in acetone-d₆: -225.2, 0.023 F; -228.5, 0.078 F; -229.5, 0.082 F; -231.2, 0.036 F; -232.8, 0.302 F; -233.2, 0.073 F; -234.3, 0.032 F; -235.5, 0.104 F; -237.6, 0.239 F; -238.4, 0.037 F; -239.8, 0.057 F; -242.0, 0.033 F. ¹¹B-NMR in acetone-d₆: -6 multiplet; -15 multiplet.

### Example 5

### Preparation of Li₂B₁₂FₓCl₁₂₋ₓ (ave. x = 11)

3 g Li₂B₁₂F₁₁H mixture dissolved in 110 mL 1 M HCl in a three neck round bottom flask fitted with a reflux condenser and fritted bubbler. 1.4 mL Br₂ was added. The mixture was heated to 100° C for 4 hours. An aliquot was removed for NMR analysis. The mixture was again heated to 100° C and Cl₂ gas was bubbled through at 15 sccm. The effluent, through the condenser was passed through a solution of KOH and Na₂SO₃. After half an hour, the red Br₂ solution was yellowish. After another 6 hours of bubbling Cl₂, the solution was purged with air. An aliquot was taken for 19F NMR and found to be identical to the first sample. HCl and water were distilled out. The residue was vacuum dried at 150 C. 2.55 g of a composition of the above formula were recovered. ¹⁹F-NMR in D₂O: -257.8, 0.024 F; -259.0, 0.039 F; -259.5, 0.040 F; -261.0, 0.028 F; -261.5, 0.028 F; -263.0, 0.321 F; -265.2, 0.382 F; -269.2, 1.0 F.

### Example 6 (comparative)

### Preparation of Li₂B₁₂FₓCl₁₂₋ₓ (ave. x = 3)

2.48 g K₂B₁₂F₃H₉ mixture was dissolved in 100 mL 1M HCl in a round bottom flask fitted with a reflux condenser. The mixture was heated to 100° C. After 8 hours of stirring, the solution was cooled to room temperature and left over the weekend. The excess Br₂ was neutralized with Na₂SO₃ and the solution was brought to a pH of 9 by the addition of Et₃N which produced a white precipitate. The solution was cooled to 0° C to maximize precipitation and then filtered on a Buchner funnel and washed with cold water. The solid was dried in a vacuum at 120° C. ¹⁹F-NMR in acetone-d₆: -212.2, 0.030F; -213.6, 0.284 F; -216, 0.100 F; -217.0, 0.100 F; -217.9, 0.100 F; -219.3, 1.0 F; -221.3, 0.201 F; -222.5, 0.311 F; -223.2, 0.100 F; -225.2, 0.100 F; -225.5, 0.639 F; -226.6, 0.149 F; -229, 0.245 F; -232.0, 0.120 F. Metathesis with LiOHH₂O was carried out as in Example 1. A composition described by the above formula was obtained.

### Example 7

### Conductivity of Lithium Electrolyte Solutions for Use in Lithium Secondary Batteries

The conductivities of solutions of the Li₂B₁₂FₓZ₁₂₋ₓ salts and pure Li₂B₁₂Cl₁₂ dissolved in a 50/50 wt.% ethylene carbonate (EC)/dimethyl carbonate (DMC) were determined using a Radiometer CDM210 conductivity meter and 2 pole CDC741T conductivity cell with build-in temperature sensor. The conductivity cell was calibrated using KCI solutions.

The conductivities, are shown in Graph 1

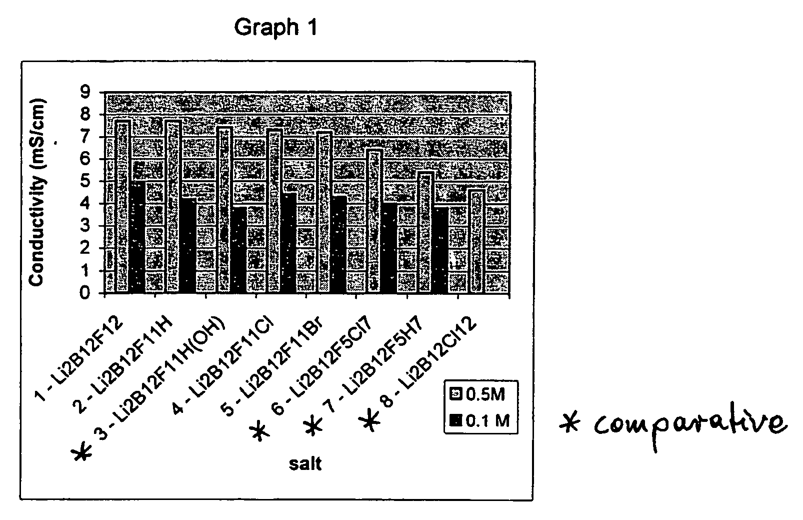

Graph 1 shows that 0.5 M electrolyte solutions of salts of the anions having 5 or more fluorine atoms have excellent bulk conductivity. Surprisingly, the

salt, Li₂B₁₂Cl₁₂, (Comparative sample 8) had the poorest conductivity of all the salts tested. At the 0.1 molar concentration, the conductivities were significantly poorer showing that commercial, large scale batteries would require higher salt concentrations.

Viewing the results in greater detail, it is unexpected that at comparable concentrations, Li₂B₁₂Cl₁₂ (Comparative sample 8) has a conductivity of only ∼ 0.6X that of the conductivity of Li₂B₁₂F₁₂ (sample 1), even though B₁₂Cl₁₂²⁻ is expected to be more weakly coordinating. Even more surprising is the fact that a 0.1M solution of Li₂B₁₂F₁₂ (sample 1) is more conducting than Li₂B₁₂Cl₁₂ (sample 8) at 5X the concentration. This effectively means that on a weight basis it takes ~ 10 times as much Li₂B₁₂Cl₁₂ as Li₂B₁₂F₁₂ in an EC/DMC mixture to achieve the same ionic conductivity.

Not revealed from Graph 1 is the relationship of the viscosity of the solutions to the bulk conductivity of the electrolyte. Under the test conditions, all of the fluorinated dodecaborates exhibited a viscosity similar to water, i.e., the solutions were pourable. On the other hand, as the concentration of halogen atoms other than fluorine increased in the lithium fluoroborate, the viscosity of the resulting solutions formed from the lithium based fluoroborate increased substantially. The bulk conductivity of the resulting solution also decreased dramatically. For example, the salt, Li₂B₁₂Cl₁₂,at a 0.5 M level was too viscous and too low in bulk conductivity to be of commercial value.

In summary, the fully chlorinated lithium salt (Li₂B₁₂Cl₁₂) when evaluated as an electrolyte salt for a lithium battery has a conductivity at useful concentrations in typical aprotic electrolytes which is relatively low (4.6mS/cm at 0.5M in 50/50 EC/DMC). On the other hand, and quite unexpectedly, Li₂B₁₂F₁₂ and the mixtures of salts Li₂B₁₂Fₓ(H, Cl, Br)₁₂₋ₓ give rise to 0.5M solutions in EC/DMC of substantially greater conductivity than the fully chlorinated derivative (7.2-7.7mS/cm). This result is surprising in view of the fact that the smaller B₁₂Fₓ(H, Cl, Br)₁₂₋ₓ²⁻ anions were not expected to be as weakly coordinating as the B₁₂Cl₁₂²⁻ anions.

### Example 8

### Evaluation of Lithium-Based Electrolyte In Lithium Battery

In this example, a 2032 button cell battery configuration was used employing a lithium foil (- electrode)||0.4-0.5M Li₂B₁₂F₁₂ in EC/DMC|| LiNi_{0.8}Co_{0.15}Al_{0.05}O₂(+ electrode). The cell was pulse charged and discharged using an Arbin Instruments BT4 series potentiostat to assess the area specific impedance (ASI) of the cell. Using this configuration, it was demonstrated that a 0.5 molar (M) solution of Li₂B₁₂F₁₂ in EC/DMC (3:7) allows equivalent or even slightly greater capacities than optimized electrolyte solutions employing 1.2 M LiPF₆ in the same cell configuration. More importantly in comparative tests it was seen that reducing the Li₂B₁₂F₁₂ concentration from 1 M to 0.5M reduces the ASI from 100Ω·cm² to 40Ω·cm² in this unoptimized solvent system. The highest electrolyte solution conductivity for Li₂B₁₂F₁₂ was observed at 0.4 M, and the conductivity at 0.3M was only slightly less than that at 0.5M. This suggested that it is possible to reduce concentration perhaps to a level of 0.3M or even 0.2 M and achieve the desired ASI without making any significant changes in solvent formulation. In fact it has been found that at a concentration of 0.4M in EC/DMC(3:7) the ASI remains at ∼ 40Ω·cm².

### Example 9

### Thermal Abuse Testing of Fully Charged Lithium-Ion Cells

Lithium-ion cells were fabricated and tested as in the previous example using a graphite rather than a lithium metal negative electrode according to the following configuration:

Graphite(- electrode)||Li₂B₁₂FₓH₁₂₋ₓ/LiPF₆ in EC/DEC|| LiNi_{0.8}Co_{0.15}Al_{0.05}O₂(+ electrode)

A number of different fluorododecaborate compositions were used (average x ranging from 9 to 12) and 3 different ratios of fluorododecaborate salt to hexafluorophosphate salt were used. Cells containing these solutions were tested according to the following profile. Using an Arbin Instruments potentiostat, the cells were charged and discharged through two 0.1 mAh (C/20 rate) formation cycles. The cells were then charged at 0.7 mAh (C/3 rate) to 4.1 V to determine pre-bake charge capacity. The open circuit potential of the cells was monitored for 2 hours as a quality control test. Only cells which remained at or above ∼ 4V were used in the subsequent stages of this test. These cells were stored at 85°C for 72 hours in their fully charged state. The cells were then discharged at 0.7 mAh (C/3 rate) to 3 V, and charged at the same rate back to 4.1 V to determine post heat treatment charge capacity. The ratio of post- to pre-heat treatment charge capacity was determined giving the % charge capacity retention. Such a test is a good accelerated measure of calendar and cycle-life stability. The higher the ratio of post- to pre-bake charge capacity the better the overall stability of the cell system.
Results of these tests are shown in Graph 2.

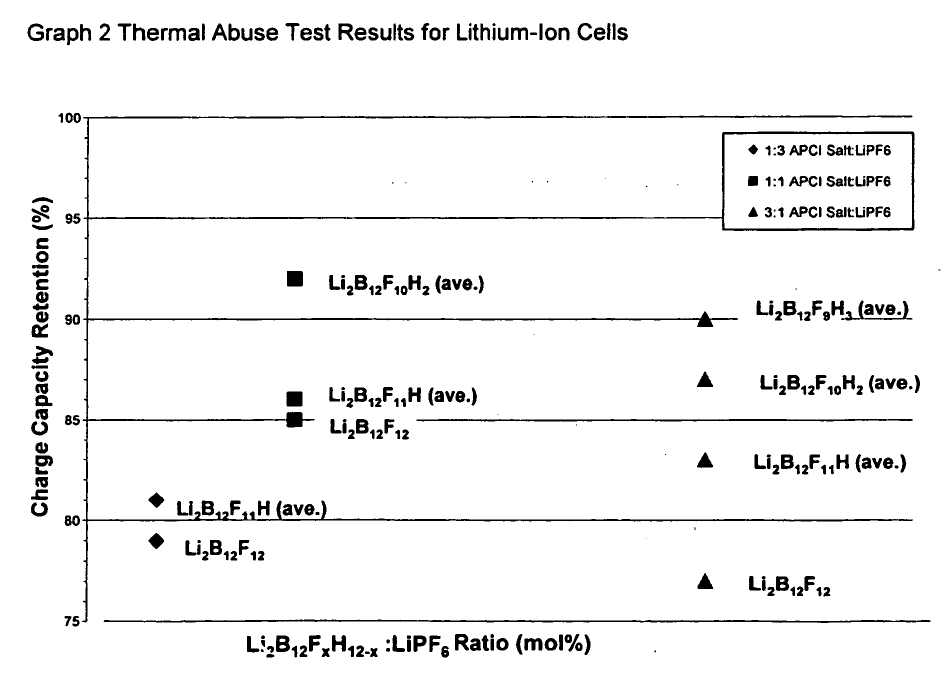

The data show that for all 3 dodecaborate:LiPF₆ ratios partially fluorinated (average x less than 12) mixtures of Li₂B₁₂FₓH₁₂₋ₓ perform better than the fully fluorinated Li₂B₁₂F₁₂ in terms of charge capacity retention and hence stability.

¹⁹F NMR analyses of electrolyte solution from the least stable Li₂B₁₂F₁₂ containing cells revealed that significant amounts of Li₂B₁₂F₁₂ had been cleanly reduced to Li₂B₁₂F₁₁H with only minor amounts of further reduction to Li₂B₁₂F₁₀H₂. Since this reduction must remove active lithium capacity from the cell, it suggests that the greater capacity losses for cells containing largely Li₂B₁₂F₁₂ may be due to the reductive instability of that salt in fully charged lithium ion cells.

However, in similar thermal abuse tests using propylene carbonate as solvent no reduction of Li₂B₁₂F₁₂ is observed suggesting that Li₂B₁₂F₁₂ will have suitable reductive stability for some lithium-ion cell configurations.

### Example 10

### Determination of Oxidative and Reductive Stability and Decomposition Temperature,of Lithium Electrolyte Solutions for Use in Lithium Secondary Batteries

To assess the oxidative stability of substituted dodecaborates as possible electrolytes, cyclic voltammetry (CV) experiments were performed using CH Instruments potentiostat and a conventional three-electrode cell under laboratory atmosphere. The working electrode was a platinum disc electrode (2 mm) and potentials were referenced to a Ag/Ag⁺ reference electrode (silver wire immersed into 0.01 M AgNO₃ in 0.1 M acetonitrile [(*n*-Bu)₄N][BF₄] in a glass tube fitted with a Vycor tip). The reference electrode was calibrated to be 0.32 V versus the normal hydrogen electrode (NHE) using a ferrocene standard (E_{1/2}(FeCp₂/FeCp₂⁺) = 0.08 V under described conditions). The electrolyte solutions were 0.01 M solutions of [(*n*-Bu)₄N][A] (A = anion of interest) in 0.1 M acetonitrile solution of [(*n*-Bu)₄N][BF₄].

The relative reductive stability was calculated as the electron affinity (EA) using Density Functional Theory (DFT) computational methods. All DFT calculations were performed with the DMol software package. The electron affinities (EA) are the energies required to push an electron from "infinity" on to the doubly charged anion in the gas phase and a higher positive electron affinity (here calculated in eV) is associated with greater stability toward reduction.

The decomposition temperature was determined by DSC measurements on a TA Instruments DC2910 Differential Scanning Calorimeter.

**Table 1.**

| Oxidation, Decomposition Temp. (Stability ) And Conductivity Of Lithium Electrolytes. | | | | |
|---|---|---|---|---|
| Compound | Molecular wt. | Conductivity (mS/cm)^{a} | Decomp. Temp. (°C) | Oxidation Potential E_{1/2} (V) vs. NHE;{~vs Li}; (reversible ?) |
| Li₂B₁₂Cl₁₂ (comparative) | 569.5 | 4.6 (0.5M) | >400 | > 2.2{> 5.3}; ? |
| Li₂B₁₂F₁₂ | 371.6 | 7.7 (0.5M) | 465 | 1.87{4.9}; (yes) |
| | | 6.0 (0.25M) | | |
| | | 4.9(0.1M) | | |
| Li₂B₁₂FₓH₁₂₋ₓ(x≥10) Average x = 11 | 353.6 | 7.7 (0.5M) | 465 | 1.73 {4.7}; (yes) |
| | | 4.2 (0.1M) | | |
| Li₂B₁₂FₓCl₁₂₋ₓ(x≥10) | 388.1 | 7.3(0.5M) | --- | 1.98 {5.1}; (yes) |
| Average x = 11 | | 4.4 (0.1M) | | |
| Li₂B₁₂FₓBr₁₂₋ₓ(x≥10) | 432.5 | 7.2 (0.5) | --- | --- |
| Average x = 11 | | 4.3(0.1) | | |
| Li₂B₁₂FₓH₁₂₋ₓ (x≥10) | ~353.6 | 7.4 (0.5) | 465 | |
| Average x = 11 Contains 5% Li₂B₁₂Fₓ(OH)₁₂₋ₓ | | 4.0(0.1) | | |
| (x=10,11) B₁₂F₁₀(OH)₂²⁻ | | --- | --- | 1.28 {4.2}; (yes) |
| Li₂B₁₂F₅H₇ (comparative) | | | >400 | 1.6 {4.6}; (yes) |
| Li₂B₁₂F₃H₉ (comparative) | | | >400 | 1.5 {4.5}; (no) |
| B₁₀Cl₁₀²⁻* | | | | 1.35; (yes) |

| | | | | |
|---|---|---|---|---|
| ^{*} B₁₀Cl₁₀²⁻ is a literature value | | | | |

**Table 2.**

| Calculated electron affinities for halogenated dodecaborate salts | |
|---|---|
| Molecule | EA (eV) |
| B₁₂Cl₁₂(2-) (comparative) | 5.04 |
| B₁₂F₁₂(2-) | 6.24 |
| B₁₂H₁₂(2-) (comparative) | 10.4 |
| | |
| B₁₂F₁₁Cl(2-) | 5.79 |
| B₁₂F₁₀Cl₂(2-) | 5.92 |
| | |
| B₁₂F₁₁(OH)(2-) (comparative) | 6.32 |
| B₁₂F₁₀(OH)₂(2-) (comparative) | 6.40 |
| | |
| B₁₂F₁₀(OCF₃)₂(2-) (comparative) | 5.52 |
| | |
| B₁₂F₁₁H(2-) | 6.66 |
| B₁₂F₁₀H₂(2-) | 7.09 |
| B₁₂F₉H₃(2-) | 7.57 |
| B₁₂F₈H₄(2-) | 7.99 |

Table 1 shows that the oxidative stabilities of the pure Li₂B₁₂Cl₁₂ (Comparative Sample), Li₂B₁₂F₁₂ and other salts of the invention are sufficiently high to evaluate them as potential lithium battery electrolytes. From Table 1, it is interesting and unexpected that the oxidative stabilities of the B₁₂Cl₁₂²⁻ anion and the Li₂B₁₂FₓCl₁₂₋ₓ (x ≥ 10) salt mixture were higher than that of the fully fluorinated anion B₁₂F₁₂²⁻. Thus, the mixed salt compositions, Li₂B₁₂FₓCl₁₂₋ₓ (x ≥10) are observed to provide a unique combination of a high conductivity with even better oxidative stability than Li₂B₁₂F₁₂, possibly rendering them useful for both high power and high voltage battery applications. Although not intending to be bound by speculation, the decrease in oxidative stability of the fully fluorinated anion B₁₂F₁₂²⁻ may be due to a π-back donation from fluorine atom to boron cluster. That analysis suggests that the B₁₂Cl₁₂²⁻ anion may actually be a more weakly coordinating anion than B₁₂F₁₂²⁻.

Table 1 also shows that the decomposition temperature of the of the fully fluorinated anion B₁₂F₁₂²⁻ and of the fully fluorinated/halogenated anion, B₁₂FₓZ₁₂₋ₓ²⁻, are at least 400°C and thus resistant to decomposition under normal battery conditions for operation. With respect to oxidative stability, lithium battery electrolytes are required to have high electrochemical oxidative stability. For high voltage lithium ion batteries, electrolyte oxidation at greater than 4.2 V vs. lithium metal (1.2 V vs NHE) is required. Because, the measured E_{1/2} is usually 0.2 to 0.4 V higher than the actual onset of oxidation, electrolyte stability to at least a measured E_{1/2} of 1.4 to 1.6 V vs. NHE is desired. As can be seen from the data in Table 1, this stability is readily met for those lithium dodecaborate salts containing more than 3 fluorine atoms.

From the data in Table 1, it is also clear that while fluorinated lithium dodecaborates with as few as 3 fluorine atoms, may possess suitable oxidative stability for certain lithium ion applications, the fact that its first oxidation is irreversible, suggests that Li₂B₁₂F₃H₉ would slowly, but steadily be depleted on successive charging and discharging of a 4.2 V lithium ion battery. The Li₂B₁₂F₄H₈ has better oxidative stability and it is likely that its first oxidation is sufficiently reversible that this salt would have reasonable stability on repeated charge/discharge cycling.

Table 2 shows the calculated electron affinities of several substituted dodecaborate salts. The results mirror the oxidative stabilities. While the data in Table 1 indicate that it is harder to oxidize B₁₂Cl₁₂²⁻ than B₁₂F₁₂²⁻, it is significantly easier to reduce B₁₂Cl₁₂²⁻ than B₁₂F₁₂²⁻. Similarly, just as chlorine atom substitution increases the oxididation potential of these salts while hydrogen atom substitution reduces these potentials, the opposite is true of the electron affinity values. Substitution of fluorine atoms with chlorine makes the B₁₂FₓZ₁₂₋ₓ²⁻ easier to reduce while subtitution of fluorine atoms with hydrogen make these salts harder to reduce, that is, B₁₂F₁₁H²⁻ is harder to reduce than is B₁₂F₁₂²⁻. Substitution with bis-trifluoromethoxy groups (-OCF₃) is similar in effect to chlorine substitution. Replacing F with OH marginally increases the EA, by an amount that is probably within the uncertainty of the method.

Based on these calculations and the thermal abuse cell stability results of example 9, it now appears that highly chlorinated dodecaborate salts, including B₁₂Cl₂²⁻, because of their ease of reduction, relative to B₁₂F₁₂²⁻, will have very poor stability in lithium ion cells.

Surprisingly, it also appears that the partially fluorinated lithium fluorododecaborate salts, Li₂B₁₂FₓH₁₂₋ₓ (where 7 ≤ x ≤ 12 or where 7 ≤ x ≤ 11 ) have the optimal combination of oxidative and reductive stability for commercial lithium ion cells.

## Claims

1. A lithium secondary battery comprising an aprotic solvent and a lithium based salt of the formula:
Li₂B₁₂FₓZ₁₂₋ₓ
where x is equal to or greater than 7 and less than or equal to 12 and Z is H, Cl or Br.

2. The lithium secondary battery of Claim 1 wherein x is equal to or greater than 8.

3. The lithium secondary battery of Claim 1 wherein x is equal to or greater than 10 and Z is C1 or Br.

4. The lithium secondary battery of Claim 1 wherein the lithium salt is selected from the group consisting of Li₂B₁₂F₇H₅, Li₂B₁₂F₈H₄, Li₂B₁₂F₉H₃, Li₂B₁₂F₁₀H₂, Li₂B₁₂F₁₁H.

5. The lithium secondary battery of Claim 1 wherein the concentration of said lithium salt in said solvent is from 0.01 to 1 molar.

6. The lithium secondary battery of Claim 1 wherein said lithium salt is selected from the group consisting of Li₂B₁₂FₓCl₁₂₋ₓ and Li₂B₁₂FₓBr₁₂₋ₓ where x is 10 or 11.

7. The lithium secondary battery of Claim 1 wherein the aprotic solvent is selected from the group consisting of ethylene carbonate, dimethyl carbonate, ethyl methyl carbonate, diethyl carbonate, methyl propyl carbonate, methyl trifluoroethyl carbonate, dimethoxyethane, diglyme, and triglyme, propylene carbonate, trifluoropropylene carbonate, chloroethylene carbonate, vinylene carbonate, butylene carbonate, dimethylvinylene carbonate, and aprotic gel polymers.

8. The lithium secondary battery of Claim 1 wherein x is 10 and at least one ZisCl.

9. The lithium secondary battery of Claim 7 wherein x is 10 or 11 and Z is Cl or Br.

10. A lithium electrolyte comprising a lithium based salt and an aprotic solvent for use in a chemical cell, said lithium salt comprising:
Li₂B₁₂FₓZ₁₂₋ₓ
wherein x is at least 7 but not more than 12 and Z is H, Cl, or Br;
and wherein the aprotic solvent is selected from the group consisting of chloroethylene carbonate, butylene carbonate, dimethyl carbonate, dimethylvinylene carbonate, ethylene carbonate, ethyl methyl carbonate, diethyl carbonate, methyl propyl carbonate, ethyl propyl carbonate, dipropyl carbonate, bis(trifluoroethyl) carbonate, bis(pentafluoropropyl) carbonate, trifluoroethyl methyl carbonate, pentafluoroethyl methyl carbonate, heptafluoropropyl methyl carbonate, perfluorobutyl methyl carbonate, trifluoroethyl ethyl carbonate, pentafluoroethyl ethyl carbonate, propylene carbonate, heptafluoropropyl ethyl carbonate, perfluorobutyl ethyl carbonate, vinylene carbonate, fluorinated oligomers, dimethoxyethane, diglyme, triglyme, dimethylvinylene carbonate, trifluoropropylene carbonate tetraethyleneglycol, dimethyl ether, polyethylene glycols, sulfones, polyethers, polyethylene oxides, polyimides, polyphosphazines, polyacrylonitriles, polysiloxanes, polymer matrix, polyether grafted polysiloxanes, aprotic gel polymers, and gamma-butyrolactone.

11. The lithium electrolyte of Claim 10 wherein x is at least 10.

12. The lithium electrolyte of Claim 10 wherein the polymer matrix comprises at least one member selected from the group of sulfonated polyimides, perfluorinated membranes, divinyl polyethylene glycols, polyethylene glycol-bis-(methyl acrylates), and polyethylene glycol-bis(methyl methacrylates)

13. The lithium electrolyte of Claim 10 wherein the solvent is selected from the group consisting of ethylene carbonate, propylene carbonate, dimethyl carbonate and diethyl carbonate.

14. The lithium electrolyte of Claim 11 wherein x is 10 or 11 and Z is Cl or Br.

15. The lithium electrolyte of Claim 10 wherein said lithium salt is selected from the group consisting of Li₂B₁₂F₇H₅, Li₂B₁₂F₈H₄, Li₂B₁₂F₉H₃, Li₂B₁₂F₁₀H₂ and Li₂B₁₂F₁₁H.

16. The lithium secondary battery of Claim 1, wherein the battery further comprises a negative electrode and a positive electrode.

17. The lithium secondary battery of Claim 16 wherein the negative electrode comprises a member selected from the group consisting of non-graphitizing carbon, natural or artificial graphite carbon, tin oxide, and silicon, or germanium compounds.

18. The lithium secondary battery of Claim 16 wherein the positive electrode comprises a lithium oxide composite.

19. The lithium secondary battery of Claim 16 wherein the negative electrode comprises non-graphitizing carbon, natural or artificial graphite carbon.

20. The lithium secondary battery of Claim 18 wherein the positive electrode comprises LiNi₁₋ₓCoₓO₂ or LiMn₂O₄.

21. The lithium secondary battery of Claim 16 further comprising a separator.

22. The lithium secondary battery of Claim 21 wherein the separator comprises a member selected from the group consisting of nylon, cellulose, nitrocellulose, polysulfone, polyacrylonitrile, polyvinylidene fluoride, polypropylene, polyethylene and polybutene.

23. The lithium secondary battery of Claim 16 further comprising a further lithium based salt selected from the group consisting of LiPF₆, lithium perchlorate, lithium hexafluoroarsenate, lithium trifluoromethylsulfonate, lithium tetrafluoroborate, lithium bromide, and lithium hexafluoroantimonate.

24. The lithium secondary battery of Claim 23 wherein said further lithium based salt comprises LiPF_{6.}

## Patentansprüche

1. Lithium-Sammelbatterie, umfassend ein aprotisches Lösungsmittel und ein auf Lithium basierendes Salz der Formel
Li₂B₁₂FₓZ₁₂₋ₓ
worin
x gleich oder größer als 7 und kleiner als oder gleich 12 ist und Z gleich H, Cl oder Br ist.

2. Lithium-Sammelbatterie nach Anspruch 1, wobei x gleich oder größer als 8 ist.

3. Lithium-Sammelbatterie nach Anspruch 1, wobei x gleich oder größer als 10 ist und Z gleich Cl oder Br ist.

4. Lithium-Sammelbatterie nach Anspruch 1, wobei das Lithiumsalz aus der Gruppe ausgewählt ist, die aus Li₂B₁₂F₇H₅, Li₂B₁₂F₈H₄, Li₂B₁₂F₉H₃, Li₂B₁₂F₁₀H₂, Li₂B₁₂F₁₁H besteht.

5. Lithium-Sammelbatterie nach Anspruch 1, wobei die Konzentration des Lithiumsalzes im Lösungsmittel 0,01 bis 1 m beträgt.

6. Lithium-Sammelbatterie nach Anspruch 1, wobei das Lithiumsalz aus der Gruppe ausgewählt ist, die aus Li₂B₁₂FₓCl₁₂₋ₓ und Li₂B₁₂FₓBr₁₂₋ₓ besteht, wobei x gleich 10 oder 11 ist.

7. Lithium-Sammelbatterie nach Anspruch 1, wobei das aprotische Lösungsmittel aus der Gruppe ausgewählt ist, bestehend aus Ethylencarbonat, Dimethylcarbonat, Ethylmethylcarbonat, Diethylcarbonat, Methylpropylcarbonat, Methyltrifluorethylcarbonat, Dimethoxyethan, Diethylenglycoldimethylether und Triethylenglycoldimethylether, Propylencarbonat, Trifluorpropylencarbonat, Chlorethylencarbonat, Vinylencarbonat, Butylencarbonat, Dimethylvinylencarbonat und aprotischen Gelpolymeren.

8. Lithium-Sammelbatterie nach Anspruch 1, wobei x gleich 10 ist und zumindest ein Z gleich Cl ist.

9. Lithium-Sammelbatterie nach Anspruch 7, wobei x gleich 10 oder 11 ist und Z gleich Cl oder Br ist.

10. Lithiumelektrolyt, umfassend ein auf Lithium basierendes Salz und ein aprotisches Lösungsmittel für die Verwendung in einer chemischen Zelle, wobei das Lithiumsalz umfaßt:
Li₂B₁₂FₓZ₁₂₋ₓ
worin
x mindestens 7 jedoch nicht mehr als 12 ist und Z gleich H, Cl oder Br ist; und
wobei das aprotische Lösungsmittel aus der Gruppe ausgewählt ist, bestehend aus Chlorethylencarbonat, Butylencarbonat, Dimethylcarbonat, Dimethylvinylencarbonat, Ethylencarbonat, Ethylmethylcarbonat, Diethylcarbonat, Methylpropylcarbonat, Ethylpropylcarbonat, Dipropylcarbonat, Bis(trifluorethyl)carbonat, Bis(pentafluorpropyl)carbonat, Trifluorethylmethylcarbonat, Pentafluorethylmethylcarbonat, Heptafluorpropylmethylcarbonat, Perfluorbutylmethylcarbonat, Trifluorethylethylcarbonat, Pentafluorethylethylcarbonat, Propylencarbonat, Heptafluorpropylethylcarbonat, Perfluorbutylethylcarbonat, Vinylencarbonat, fluorierten Oligomeren, Dimethoxyethan, Diethylenglycoldimethylether, Triethylenglycoldimethylether, Dimethylvinylencarbonat, Trifluorpropylencarbonat, Tetraethylenglycol, Dimethylether, Polyethylenglycolen, Sulfonen, Polyethern, Polyethylenoxiden, Polyimiden, Polyphosphazinen, Polyacrylnitrilen, Polysiloxanen, einer Polymermatrix, mit Polyether gepfropften Polysiloxanen, aprotischen Gelpolymeren und γ-Butyrolacton.

11. Lithiumelektrolyt nach Anspruch 10, wobei x mindestens 10 ist.

12. Lithiumelektrolyt nach Anspruch 10, wobei die Polymermatrix zumindest einen Bestandteil umfaßt, der aus der Gruppe von sulfonierten Polyimiden, perfluorierten Membranen, Divinylpolyethylenglycolen, Polyethylenglycol-bis-(methylarcylaten) und Polyethylenglycol-bis(methylmethacrylaten) ausgewählt ist.

13. Lithiumelektrolyt nach Anspruch 10, wobei das Lösungsmittel aus der Gruppe ausgewählt ist, die aus Ethylencarbonat, Propylencarbonat, Dimethylcarbonat und Diethylcarbonat besteht.

14. Lithiumelektrolyt nach Anspruch 11, wobei x gleich 10 oder 11 ist und Z gleich Cl oder Br ist.

15. Lithiumelektrolyt nach Anspruch 10, wobei das Lithiumsalz aus der Gruppe ausgewählt ist, die aus Li₂B₁₂F₇H₅, Li₂B₁₂F₈H₄, Li₂B₁₂F₉H₃, Li₂B₁₂F₁₀H₂ und Li₂B₁₂F₁₁H besteht.

16. Lithium-Sammelbatterie nach Anspruch 1, wobei die Batterie ferner eine negative Elektrode und eine positive Elektrode umfaßt.

17. Lithium-Sammelbatterie nach Anspruch 16, wobei die negative Elektrode einen Bestandteil umfaßt, der aus der Gruppe ausgewählt ist, die aus nicht-turbostratischem Graphit, natürlicher oder künstlicher Graphitkohle, Zinnoxid und Silicium oder Germaniumverbindungen besteht.

18. Lithium-Sammelbatterie nach Anspruch 16, wobei die positive Elektrode einen Lithiumoxid-Composit umfaßt.

19. Lithium-Sammelbatterie nach Anspruch 16, wobei die negative Elektrode nicht-turbostratischen Graphit, natürliche oder künstliche Graphitkohle umfaßt.

20. Lithium-Sammelbatterie nach Anspruch 18, wobei die positive Elektrode LiNi₁₋ₓCoₓO₂ oder LiMn₂O₄ umfaßt.

21. Lithium-Sammelbatterie nach Anspruch 16, die ferner einen Separator umfaßt.

22. Lithium-Sammelbatterie nach Anspruch 21, wobei der Separator einen Bestandteil umfaßt, der aus der Gruppe ausgewählt ist, die aus Nylon, Cellulose, Nitrocellulose, Polysulfon, Polyarcylnitril, Polyvinylidenfluorid, Polypropylen, Polyethylen und Polybuten besteht.

23. Lithium-Sammelbatterie nach Anspruch 16, die ferner ein weiteres auf Lithium basierendes Salz umfaßt, das aus der Gruppe ausgewählt ist, die aus LiPF₆, Lithiumperchlorat, Lithiumhexafluorarsenat, Lithiumtrifluormethylsulfonat, Lithiumtetrafluorborat, Lithiumbromid und Lithiumhexafluorantimonat besteht.

24. Lithium-Sammelbatterie nach Anspruch 23, wobei das weitere auf Lithium basierende Salz LiPF₆ umfaßt.

## Revendications

1. Batterie rechargeable au lithium comprenant un solvant aprotique et un sel à base de lithium de formule :
Li₂B₁₂FₓZ₁₂₋ₓ
où x est égal ou supérieur à 7 et inférieur ou égal à 12 et Z est H, Cl ou Br.

2. Batterie rechargeable au lithium selon la revendication 1, où x est égal ou supérieur à 8.

3. Batterie rechargeable au lithium selon la revendication 1, où x est égal ou supérieur à 10 et Z est Cl ou Br.

4. Batterie rechargeable au lithium selon la revendication 1, où le sel de lithium est choisi parmi le groupe consistant en Li₂B₁₂F₇H₅, Li₂B₁₂F₈H₄, Li₂B₁₂F₉H₃, Li₂B₁₂F₁₀H₂, Li₂B₁₂F₁₁H.

5. Batterie rechargeable au lithium selon la revendication 1, où la concentration dudit sel de lithium dans ledit solvant est de 0,1 à 1 molaire.

6. Batterie rechargeable au lithium selon la revendication 1, où ledit sel de lithium est choisi parmi le groupe consistant en Li₂B₁₂FₓCl₁₂₋ₓ et Li₂B₁₂FₓBr₁₂₋ₓ où x est égal à 10 ou 11.

7. Batterie rechargeable au lithium selon la revendication 1, où le solvant aprotique est choisi parmi le groupe consistant en éthylène carbonate, diméthyl carbonate, éthyl méthyl carbonate, diéthyl carbonate, méthyl propyl carbonate, méthyl trifluoroéthyl carbonate, diméthoxyéthane, diglyme, et triglyme, propylène carbonate, trifluoropropylène carbonate, chloroéthylène carbonate, vinylène carbonate, butylène carbonate, diméthylvinylène carbonate, et polymères de gels aprotiques.

8. Batterie rechargeable au lithium selon la revendication 1, où x est égal à 10 et au moins un Z est Cl.

9. Batterie rechargeable au lithium selon la revendication 7, où x est égal à 10 ou 11 et Z est Cl ou Br.

10. Électrolyte de lithium comprenant un sel à base de lithium et un solvant aprotique destiné à une utilisation dans une pile chimique ledit sel de lithium comprenant :
Li₂B₁₂FₓZ₁₂₋ₓ
où x est au moins égal à 7 mais n'est pas supérieur à 12 et Z est H, Cl, ou Br ;
et où le solvant aprotique est choisi parmi le groupe consistant en chloroéthylène carbonate, butylène carbonate, diméthyl carbonate, diméthylvinylène carbonate, éthylène carbonate, éthyl méthyl carbonate, diéthyl carbonate, méthyl propyl carbonate, éthyl propyl carbonate, dipropyl carbonate, bis(trifluoroéthyl) carbonate, bis(pentafluoropropyl) carbonate, trifluoroéthyl méthyl carbonate, pentafluoroéthyl méthyl carbonate, heptafluoropropyl méthyl carbonate, perfluorobutyl méthyl carbonate, trifluoroéthyl éthyl carbonate, pentafluoroéthyl éthyl carbonate, propylène carbonate, heptafluoropropyl éthyl carbonate, perfluorobutyl éthyl carbonate, vinylène carbonate, oligomères fluorés, diméthoxyéthane, diglyme, triglyme, diméthylvinylène carbonate, trifluoropropylène carbonate tétraéthylèneglycol, diméthyl éther, polyéthylène glycols, sulfones, polyéthers, oxydes de polyéthylène, polyimides, polyphosphazines, polyacrylonitriles, polysiloxanes, matrices polymères, polysiloxanes gréffés de polyéther, polymères de gels aprotiques, et gamma-butyrolactone.

11. Électrolyte de lithium selon la revendication 10, où x est au moins égal à 10.

12. Électrolyte de lithium selon la revendication 10, où la matrice polymère comprend au moins un élément choisi parmi le groupe de polyimides sulfonés, membranes perfluorées, divinyl polyéthylène glycols, polyéthylène glycol-bis-(méthyl acrylates), et polyéthylène glycol-bis(méthyl méthacrylates).

13. Électrolyte de lithium selon la revendication 10, où le solvant est choisi parmi le groupe consistant en éthylène carbonate, propylène carbonate, diméthyl carbonate et diéthyl carbonate.

14. Électrolyte de lithium selon la revendication 11, où x est égal à 10 ou 11 et Z est Cl ou Br.

15. Électrolyte de lithium selon la revendication 10, où ledit sel de lithium est choisi parmi le groupe consistant en Li₂Bi₂F₇H₅, Li₂Bi₂F₈H₄, Li₂B₁₂F₉H₃, Li₂Bi₂F₁₀H₂ et Li₂B₁₂F₁₁H.

16. Batterie rechargeable au lithium selon la revendication 1, où la batterie comprend en outre une électrode négative et une électrode positive.

17. Batterie rechargeable au lithium selon la revendication 16, où l'électrode négative comprend un élément choisi parmi le groupe consistant en carbone non graffité, carbone graffité naturel ou artificiel, oxydes d'étain, et composés du silicium, ou du germanium.

18. Batterie rechargeable au lithium selon la revendication 16, où l'électrode positive comprend un composite d'oxyde de lithium.

19. Batterie rechargeable au lithium selon la revendication 16, où l'électrode négative comprend du carbone non graffité, du carbone graffité naturel ou artificiel.

20. Batterie rechargeable au lithium selon la revendication 18, où l'électrode positive comprend LiNi₁₋ₓCo_{X}O₂ ou LiMn₂O₄.

21. Batterie rechargeable au lithium selon la revendication 16, comprenant en outre un séparateur.

22. Batterie rechargeable au lithium selon la revendication 21, où le séparateur comprend un élément choisi parmi le groupe consistant en nylon, cellulose, nitrocellulose, polysulfone, polyacrylonitrile, fluorure de polyvinylidène, polypropylène, polyéthylène et polybutène.

23. Batterie rechargeable au lithium selon la revendication 16 comprenant en outre un autre sel à base de lithium choisi parmi le groupe consistant en LiPF₆, perchlorate de lithium, hexafluoroarséniate de lithium, trifluorométhylsulfonate de lithium, tétrafluoroborate de lithium, bromure de lithium, hexafluoroantimonate de lithium.

24. Batterie rechargeable lithium selon la revendication 23, où ledit sel à base de lithium comprend en outre LiPF₆.
